Europäisches Patentamt

(19) European Patent Office

Office européen des brevets

(11) Veröffentlichungsnummer: **0 069 826**
**B1**

(12) EUROPÄISCHE PATENTSCHRIFT

(45) Veröffentlichungstag der Patentschrift:
16.10.85

(51) Int. Cl.⁴: **G 01 B 7/30, G 01 D 5/25**

(21) Anmeldenummer: **82102591.3**

(22) Anmeldetag: **27.03.82**

(54) **Einrichtung zum Einstellen und Überprüfen einer vorbestimmten Drehlage eines Rotationskörpers.**

(30) Priorität: **09.07.81 DE 3127048**

(43) Veröffentlichungstag der Anmeldung:
**19.01.83 Patentblatt 83/3**

(45) Bekanntmachung des Hinweises auf die Patenterteilung:
**16.10.85 Patentblatt 85/42**

(84) Benannte Vertragsstaaten:
**AT DE FR GB IT**

(56) Entgegenhaltungen:
**DE - A - 2 700 878**
**DE - A - 2 949 018**
**DE - B - 1 098 327**
**FR - A - 1 404 069**
**GB - A - 2 065 793**
**US - A - 3 155 182**
**US - A - 3 499 226**
**US - A - 3 553 671**

(73) Patentinhaber: **ROBERT BOSCH GMBH, Postfach 50,
D-7000 Stuttgart 1 (DE)**

(72) Erfinder: **Frey, Hansjörg, Nauenerstrasse 27,
D-7000 Stuttgart 70 (DE)**
Erfinder: **Hampel, Heinrich, Rosenaustrasse 20,
D-7000 Stuttgart 50 (DE)**
Erfinder: **Müller, Rolf, Adalbert-Stifter-Strasse 8,
D-7000 Stuttgart 40 (DE)**
Erfinder: **Ritter, Ernst, Gustav-Klein-Strasse 17,
D-7000 Stuttgart 30 (DE)**
Erfinder: **Schwartz, Reinhard, Dipl.-Ing.,
Rankestrasse 30, D-7000 Stuttgart 75 (DE)**

## Beschreibung

### Stand der Technik

Die Erfindung geht aus von einer Einrichtung nach dem Oberbegriff des Anspruchs 1.

Zum Einstellen, Überprüfen und Wiederauffinden einer vorbestimmten Drehlage eines Rotationskörpers ist erforderlich, die Drehlage einer fest mit dem Rotationskörper verbundenen Winkelgebermarke genau einstellen zu können und die Drehlage der Winkelgebermarke nach dieser Einstellung mit Bezug auf einen Festpunkt am zugehörigen Gehäuse des Rotationskörpers überprüfen zu können. So ist es insbesondere bei Kraftstoffeinspritzpumpen notwendig, die Förderbeginnstellung oder eine dem Förderbeginn entsprechende Drehlage des – vom Antrieb aus gesehen – dem ersten Pumpenauslass zugeordneten Nockens der hier den Rotationskörper bzw. die Antriebswelle darstellenden Nockenwelle zu messen und danach die Nockenwelle festzuhalten, um die Einspritzpumpe an die entsprechend vorbereitete Brennkraftmaschine anbauen zu können. Um nun die Förderbeginnstellung der Nockenwelle erstmals einstellen zu können, sind verschiedene statische und auch dynamische Messverfahren bekannt. Das älteste statische Messverfahren ist die sogenannte «Überlaufmethode», durch die der statische Förderbeginn der bezüglich ihres Vorhubs bereits eingestellten Einspritzpumpe gesucht werden kann. Der Pumpensaugraum wird unter Kraftstoffdruck gesetzt und die Nockenwelle langsam soweit verdreht, bis der Pumpenkolben bei seinem Aufwärtshub die Saugbohrung verschliesst und der Kraftstoff aufhört auszufliessen. In dieser Drehlage wird eine Förderbeginnmarkierung mittels einer am Gehäuse angebrachten Strichmarke vorgenommen, die jedoch bezüglich der verschärften Abgasbestimmungen zu ungenau ist und den schwerwiegenden Nachteil hat, dass die Strichmarkenmarkierung von aussen nicht oder sehr schwer einzusehen ist, wenn die Pumpe z.B. mit einem Stirnflansch an den Räderkasten der Brennkraftmaschine angebaut wird.

Dynamische Messverfahren, wie sie durch die DE-A 2 700 878 und die DE-A 2 949 018 bekannt geworden sind, sind genauer, allerdings bezüglich des Messgeräteaufwandes sehr aufwendig und teuer, können jedoch im Einspritzpumpenherstellerwerk zum erstmaligen Einstellen der vorbestimmten Drehlage der Winkelgebermarke herangezogen werden.

Eine dem Oberbegriff des Anspruchs 1 zugrundeliegende Einrichtung zum Überprüfen der Förderbeginnstellung der Antriebswelle der Kraftstoffeinspritzpumpe wird bei dem in der vorgenannten DE-A 2 949 018 beschriebenen Messverfahren verwendet und ist dort insbesondere zur Figur 3 beschrieben. Als Signalgeber dient dort ein mit seinem Gebergehäuse zu dem die Nockenwelle aufnehmenden Reglergehäuse lagefixiert befestigter Induktivgeber, und die zugehörige, als Signalauslöser wirkende Winkelgebermarke ist als ein aus einem mit der Nockenwelle umlaufenden Teil herausragender Vorsprung ausgebildet. Diese Einrichtung ist bei laufender Brennkraftmaschine zum Überprüfen der vorher durch eine sehr aufwendige Messeinrichtung eingestellten vorbestimmten Drehlage der als Antriebswelle der Kraftstoffeinspritzpumpe dienenden Nockenwelle verwendbar, ergibt jedoch nur bei angetriebener Brennkraftmaschine ein genügend genaues Drehlagensignal. Ein Wiederauffinden dieser vorbestimmten Drehlage bei einer nicht angetriebenen Kraftstoffeinspritzpumpe ist nicht möglich, da ein Induktivgeber bei langsamer Bewegung der Winkelgebermarke nicht in der Lage ist, ein genaues Drehlagensignal abzugeben.

Aus der FR-A 1 404 069 ist ebenfalls eine die Merkmale des Oberbegriffs des Anspruchs 1 aufweisende Einrichtung zum Anzeigen einer vorbestimmten Drehlage einer Antriebswelle einer Werkzeugmaschine bekannt, bei der als Winkelgebermarke jeweils eine Flanke einer Nockeneinkerbung an einer mit der Welle verbundenen Nockenscheibe dient und als einen radial nach aussen verschiebbaren Geberkörper einen Kontaktstift eines Kontaktschalters bei Erreichen der vorbestimmten Drehlage zur Auslösung eines entsprechenden Signals betätigt. Um die Welle herum sind mehrere solcher Kontaktschalter angeordnet, die mit den entsprechenden als Signalauslöser dienenden Einkerbungen an Nockenscheiben zusammenwirken. Bei dieser Einrichtung wird also eine Folge von Signalen erzeugt, die unterschiedlichen Drehstellungen entsprechen, eine in Richtung der gestellten Aufgabe liegende Lösung ist dieser Druckschrift nicht zu entnehmen.

Desweiteren ist aus der De-B 1 098 327 eine Einrichtung zum Einstellen und Überprüfen einer Transversalverschiebung eines Werkzeugmaschinenschlittens bekannt, die abgesehen davon, dass anstelle einer vorbestimmten Drehlage eines Rotationskörpers die Verschiebelage eines längsbeweglichen Schlittens überprüft wird, über die entsprechenden Merkmale des Oberbegriffs des Anspruchs 1 hinaus auch noch einen verschiebbar im Gebergehäuse geführten Geberkörper aufweist, der zweiteilig ausgebildet ist und bei Annäherung an die anzuzeigende Lage und bei Erreichen dieser Lage je ein Lagesignal mittels eines ersten und eines zweiten Kontaktschalters in einem Grobanzeigeschaltkreis und in einem Feinanzeigeschaltkreis auslöst. Die jeweiligen Schaltkontakte werden über komplizierte Hebelarmsysteme von den beiden gegeneinander verschiebbaren Körperteilen des Geberkörpers gesteuert. Der mechanische Aufbau dieser Einrichtung ist äusserst kompliziert, schwierig einzustellen und für den erfindungsgemässen Zweck nicht anwendbar.

Aus der US-A 3 553 671 ist ausserdem eine einen Grob- und Feinanzeigeschaltkreis enthaltende Einrichtung zum Überprüfen einer vorbestimmten Lage an einem Werkstück bekannt, die einen in einem Gebergehäuse verschiebbar geführten Geberkörper aufweist, der mit einem Kontaktschalter zusammenarbeitet und bei Beginn der Bearbeitung eines Werkstücks ein erstes Signal im Grobanzeigeschaltkreis und zur Steuerung eines Feinarbeitsgangs nach dem Grobarbeitsgang einen zweiten Kontaktschalter des Feinanzeigeschaltkreises betätigt. Beide Schaltstellungen werden durch Kontrolleuchten angezeigt. Eine vorbestimmte Drehlage eines Rotationskörpers, insbesondere die Förderbeginnstellung der Antriebswelle einer Kraftstoffeinspritzpumpe, kann mit einer solchen Einrichtung mit erforderlicher Genauigkeit nicht eingestellt und überprüft werden.

Der im Anspruch 1 angegebenen Erfindung liegt die Aufgabe zugrunde, eine einfache Prüfeinrichtung bereitzustellen, mittels der ohne grossen Messgeräteaufwand die einmal gestellte Förderbeginnstellung der Antriebswelle überprüft oder gegebenenfalls im Falle einer Pumpenreparatur auch wieder eingestellt werden kann.

Vorteile der Erfindung

Die erfindungsgemässe Einrichtung hat den Vorteil, dass bereits bei Annäherung an die vorbestimmte Drehlage ein erstes Grobanzeigesignal vorhanden ist und danach durch den zweiten Kontaktschalter auf einfache Weise die exakte Drehlagenstellung festgestellt werden kann. Zum erstmaligen Einstellen der vorbestimmten Drehlage kann die erfindungsgemässe Einrichtung in Kombination mit einem bekannten Förderbeginnsignalgeber verwendet werden, um die Marke in bezug auf das Gehäuse in die richtige Lage zu bringen. Ist die Antriebswelle der Einspritzpumpe bzw. der Rotationskörper bereits eingestellt worden, dann genügt es, den Signalgeber am zugehörigen Gehäuse des Rotationskörpers zu befestigen und die Antriebswelle so lange zu drehen, bis das vom zweiten Kontaktschalter des Feinanzeigeschaltkreises ausgelöste Drehlagensignal vorhanden ist.

Durch die in den Ansprüchen 2 bis 11 aufgeführten Merkmale sind vorteilhafte Ausgestaltungen, Weiterbildungen und Verbesserungen der erfindungsgemässen Einrichtung möglich. So wird durch die Merkmale des Anspruchs 2 eine einfache Herstellung des Geberkörpers und einwandfreie Isolierung gegenüber dem Gehäuse erreicht. Bei einem gemäss Anspruch 3 ausgebildeten Ausführungsbeispiel ist es möglich, den gesamten Geberkörper aus Isolierstoff herzustellen, und bei einer Ausgestaltung der Einrichtung nach Anspruch 4 ist es möglich, die Einrichtung mit einer separaten Betriebsspannungsquelle, z.B. Trockenbatterien, auszustatten, so dass die gesamte Einrichtung wie eine einfache Prüflampe zu handhaben ist. Durch die gemäss Anspruch 5 vorgeschlagene Verwendung eines Endschalters als erster Kontaktschalter kann ein handelsübliches Bauteil verwendet werden.

Bei einer gemäss den Ansprüchen 6 oder 7 ausgestalteten Einrichtung kann diese an das Bordnetz oder auch an eine separate Betriebsspannungsquelle angeschlossen werden, ausserdem ist eine sichere Funktion gewährleistet.

Bei einer gemäss den Merkmalen des Anspruchs 9 ausgestalteten Einrichtung können sowohl der Signalgeber als auch das die Winkelgebermarke tragende Teil die durch die Fertigung festgelegte Lage behalten; zur Einstellung der vorbestimmten Drehlage wird lediglich die Winkelgebermarke durch ein entsprechendes Werkzeug in die genau dem Förderbeginn entsprechende Lage montiert. Damit die einmal festgehaltene und eingestellte Lage der Winkelgebermarke sich nicht verstellen kann, ist es vorteilhaft, dass die Seitenwände des Langlochs gemäss den Merkmalen des Anspruchs 10 ausgestaltet sind. Eine sehr günstige Montagemöglichkeit ergibt sich, wenn die Einrichtung gemäss den Merkmalen des Anspruchs 11 ausgestaltet ist.

Zeichnung

Drei Ausführungsbeispiele der erfindungsgemässen Einrichtung werden nachstehend anhand der Zeichnung näher beschrieben. Es zeigen:

Fig. 1 eine vereinfachte Darstellung des ersten Ausführungsbeispiels,
Fig. 2 eine vereinfachte Darstellung des zweiten Ausführungsbeispiels,
Fig. 3 ein praktisches Ausführungsbeispiel eines beim zweiten Ausführungsbeispiel verwendeten Signalgebers,
Fig. 4 das dritte Ausführungsbeispiel mit einem im Querschnitt dargestellten praktischen Ausführungsbeispiel eines auch beim ersten Ausführungsbeispiel verwendbaren Signalgebers,
Fig. 5 eine Teilschnittdarstellung des dritten Ausführungsbeispiels mit eingezeichnetem Werkzeug zur Befestigung der Winkelgebermarke und
Fig. 6 einen teilweise dargestellten Schnitt längs der Linie VI–VI in Figur 5.

Beschreibung der Ausführungsbeispiele

Obwohl die erfindungsgemässe Einrichtung zum Einstellen und Überprüfen einer vorbestimmten Drehlage eines beliebigen Rotationskörpers, z.B. auch eines Werkzeugdrehtisches, verwendet werden kann, sind in den nachfolgend beschriebenen Ausführungsbeispielen ausschliesslich Einrichtungen zum Ermitteln der Förderbeginnstellung der Antriebswelle von Kraftstoffeinspritzpumpen beschrieben.

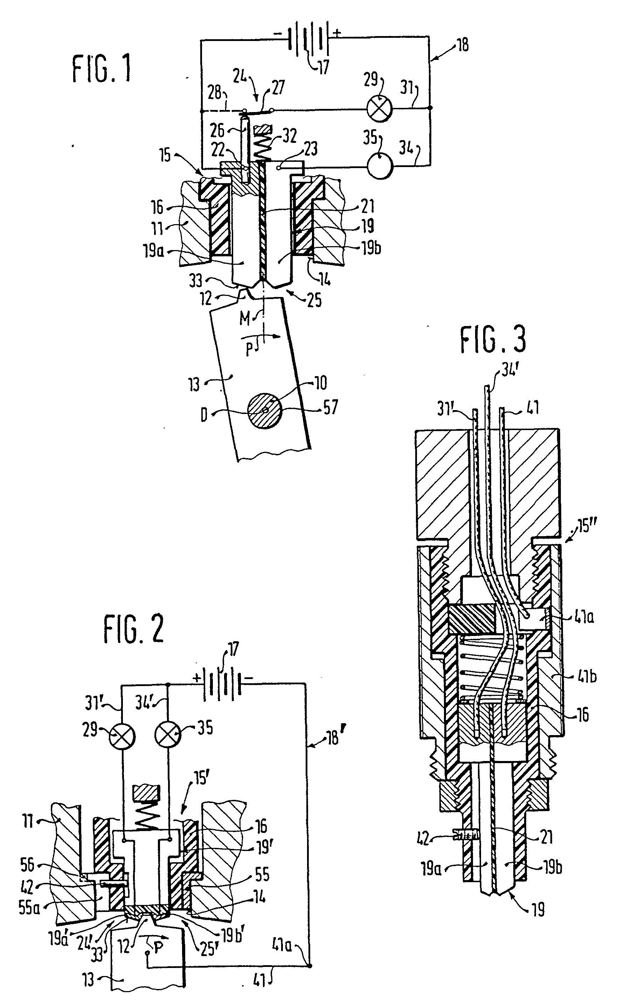

So ist bei dem in Figur 1 vereinfacht dargestellten ersten Ausführungsbeispiel eine als Rotationskörper dienende, sich um eine Drehachse D drehende Antriebs- oder Nockenwelle 10 einer nicht näher dargestellten Kraftstoffeinspritzpumpe in einem zugehörigen Gehäuse 11 gelagert und fest mit einem eine Winkelgebermarke 12 tragenden Teil 13 verbunden. Das Teil 13 kann ein gesondertes, mit der Antriebswelle 10 durch eine Konusverbindung verbundenes Bauteil sein, es kann jedoch auch von einem Fliehgewichtsträger eines Fliehkraftdrehzahlreglers gebildet sein. In einer Aufnahmebohrung 14 des Gehäuses 11 ist ein Signalgeber 15 mit einem aus Isolierstoff gefertigten Gebergehäuse 16 eingesetzt und an eine mit einer Batterie 17 versehene Prüfschaltung 18 angeschlossen.

Der Signalgeber 15 nimmt in seinem Gebergehäuse 16 einen radial zur Drehachse D verschiebbaren Geberkörper 19 auf, der im wesentlichen aus zwei, durch eine durch seine mit M bezeichnete Mittelachse gehende Isolierschicht 21 elektrisch getrennten, jedoch durch ein Klebmittel verbundenen Körperteilen 19a und 19b besteht. Beide Körperteile 19a und 19b sind über elektrische Anschlüsse 22 und 23 an die Prüfschaltung 18 angeschlossen und dienen zugleich als Schaltkontakte eines ersten Kontaktschalters 24 und eines zweiten Kontaktschalters 25. Dazu ist das eine Körperteil 19a mit einem stiftförmigen Kontaktteil 26 versehen, der in der gezeichneten Stellung mit einer Kontaktzunge 27 des ersten Kontaktschalters 24 in Berührung steht. Dieser Kontaktschalter 24 kann, wie ausgezogen dargestellt, als reiner Berührungsschalter arbeiten, er kann jedoch auch, wie durch eine gestrichelte Verbindung 28 zum Masseanschluss der Batterie 17 angedeutet, als ein Endschalter ausgebildet sein.

Der erste Kontaktschalter 24 ist ein Teil eines mit einer Kontrolleuchte 29 versehenen Grobanzeigeschaltkreises 31. Durch ein Kreuz in der Leuchte 29 ist angedeutet, dass durch den Schalter 24 der Grobanzeigeschaltkreis 31 geschlossen ist und durch die eingeschaltete Kontrolleuchte 29 ein entsprechendes Vorsignal abgibt. In der dargestellten Stellung des Geberkörpers 19 ist dieser durch die in Richtung eines Pfeiles P verdrehte Antriebswelle 10 und durch die mit dieser fest verbundene Winkelgebermarke 12 zur Betätigung des Kontaktschalters 24 entgegen der Kraft einer Rückstellfeder 32 angehoben worden. Um diese Hubbewegung zu erzeugen, ist der Geberkörper 19 an seiner äusseren, der Winkelgebermarke 12 zugewandten Stirnfläche als ein Formnocken 33 ausgebildet. Dreht sich die Antriebswelle 10 bzw. das mit dem Winkelgeber 12 versehenen Teil 13 weiter in Pfeilrichtung in die z.B. in Figur 2 angedeutete Mittellage, dann verbindet die Winkelgebermarke 12 die beiden jetzt als Schaltkontakte des zweiten Kontaktschalters 25 dienenden Körperteile 19a und 19b, so dass dann eine in einen Feinanzeigeschaltkreis 34 eingefügte Kontrolleuchte 35 aufleuchtet.

Bei in Verlängerung der Mittelachse M des Geberkörpers 19 stehender Winkelgebermarke 12 stellen die beiden Schaltkontakte 19a und 19b mit der Winkelgebermarke 12 eine Kontaktbrücke her, bilden damit den zweiten Kontaktschalter 25 und lösen ein Drehlagensignal aus, das exakt die gesuchte bzw. vorher eingestellte vorbestimmte Drehlage der Antriebswelle 10 anzeigt. Sobald sich die Winkelgebermarke 12 aus der Mittellage wegbewegt, erlischt die zweite Kontrolleuchte 35 wieder und zeigt an, dass die Winkelgebermarke 12 nicht mehr in der Mittellage steht.

Bei den nachfolgenden Ausführungsbeispielen sind gleiche oder gleichwirkende Teile gleich bezeichnet, stark abweichende Teile mit einem Indexstrich versehen und neue Teile neu bezeichnet.

Das zweite, in Figur 2 vereinfacht dargestellte Ausführungsbeispiel enthält ebenfalls eine mit den zwei Kontrolleuchten 29 und 35 versehene Prüfschaltung 18, die beiden mit 31′ und 34′ bezeichneten Anzeigeschaltkreise sind jedoch in abweichender Weise betätigt. Die an dem Fliehgewichtsträger 13 befestigte Winkelgebermarke 12 ist über einen Masseanschluss 41 mit dem Minuspol der Batterie 17 verbunden und dient je nach seiner jeweiligen Stellung als ein Schaltkontakt bzw. als der Massekontakt für die beiden hier mit 24′ und 25′ bezeichneten Kontaktschalter des Signalgebers 15′. Der Geberkörper 19′ trägt an seiner der Winkelgebermarke 12 zugewandten äusseren Stirnfläche 33 zwei gegeneinander und zum Geberkörper 19′ isolierte Kontaktflächen 19a′ und 19b′, die je nach der Drehrichtung des Teiles 13 den jeweils anderen Schaltkontakt des ersten und zweiten Kontaktschalters 24′ und 25′ bilden.

Dreht sich das die Winkelgebermarke 12 tragende Teil 13 in die entsprechend dem eingezeichneten Pfeil P angegebene Drehrichtung, so berührt die als Schaltkontakt dienende Winkelgebermarke 12 zuerst die Kontaktfläche 19a′ und bildet mit dieser den ersten, in den Grobanzeigeschaltkreis 31′ eingefügten Kontaktschalter 24′. Gelangt die Winkelgebermarke 12 in die gezeichnete Mittellage, dann stellt sie auch eine Verbindung zu der zweiten Kontaktfläche 19b′ her und bildet mit dieser zusammen den in den Feinanzeigeschaltkreis 34′ eingefügten zweiten Kontaktschalter 25′. In der gezeichneten Mittellage leuchten beide Kontrolleuchten 29 und 35 auf, wodurch die exakte Mittellage angezeigt wird. Bei entgegen der Pfeilrichtung stattfindender Drehung des Teiles 13 würde der Anzeigeschaltkreis 34′ als Grobanzeigeschaltkreis und der Anzeigeschaltkreis 31′ als Feinanzeigeschaltkreis und der Schalter 25′ als erster und der Schalter 24′ als zweiter Kontaktschalter wirken. Die in Figur 2 dargestellte Schaltung zeigt also auch durch die zuerst aufleuchtende Kontrolleuchte die jeweilige Drehrichtung an, mit der die Winkelgebermarke 12 sich der zu messenden Mittellage nähert.

Das in Figur 3 im Schnitt dargestellte praktische Ausführungsbeispiel des in Figur 2 verwendbaren Signalgebers 15″ enthält in seinem aus Isolierstoff bestehenden Gebergehäuse 16 einen Geberkörper, der wie beim ersten Ausführungsbeispiel aus zwei Körperteilen 19a und 19b mittels einer zwischengelegten Isolierschicht 21 hergestellt ist und deshalb auch wie in Figur 1 mit 19 bezeichnet ist. Die Anschlüsse an die Prüfschaltung 18′ erfolgen wie bei Figur 2. Als Teil des Masseanschlusses 41 enthält der Signalgeber 15″ einen Schleifkontakt 41a, der über eine metallene Rändelschraube 41b die Masseverbindung von der Batterie 17 zur Winkelgebermarke 12 herstellt (siehe dazu Figur 2). Ein im Gebergehäuse 16 befestigter Fixierstift 42 dient sowohl der Drehlagensicherung des Geberkörpers 19 zum Gehäuse 16 als auch der Drehlagensicherung des Gebergehäuses 16 gegenüber der hier nicht näher dargestellten Aufnahmebohrung im zugehörigen Gehäuse. Die aus dem Inneren des Signalgebers 15″ herausgeführten und mit den Schaltkontakten 19a und 19b verbundenen Leitungen sind zur Vereinfachung mit 31′ und 34′ bezeichnet, da sie als Teile dieser beiden Anzeigeschaltkreise anzusehen sind.

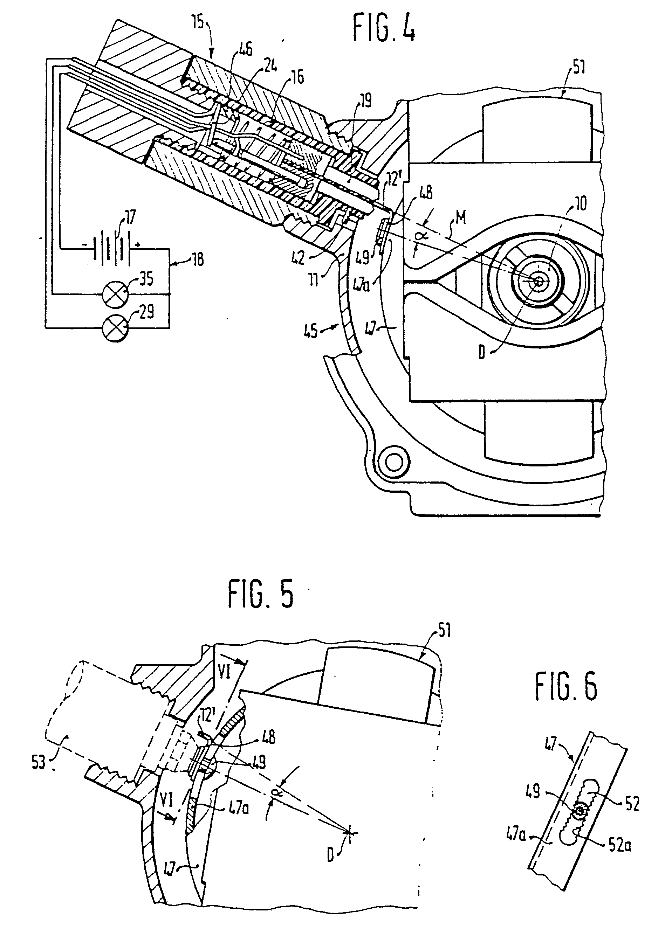

Beim dritten, in Figur 4 dargestellten Ausführungsbeispiel ist der mit der Prüfschaltung 18 versehene Signalgeber 15 durch den Fixierstift 42 drehlagengesichert in das Gehäuse 11 eines Fliehkraftdrehzahlreglers 45 eingesetzt. Der im Längsschnitt dargestellte Signalgeber 15 entspricht in Aufbau und Funktion dem zu Figur 1 beschriebenen Signalgeber 15 und trägt innerhalb des Gebergehäuses 16 den auf einer Isolierstoffplatte 46 am Gehäuse 16 befestigten ersten Kontaktschalter 24. Bei diesem in den Figuren 4 bis 6 dargestellten Ausführungsbeispiel besteht die Winkelgebermarke 12′ aus einem über die Oberfläche einer Blechkapsel 47 herausragenden, rechtwinklig abgebogenen Lappen eines Blechwinkels 48 der auf einen Wandteil 47a dieser Blechkapsel 47 mittels eines Blindniets 49 aufgenietet ist. Die Blechkapsel 47 ist ein Teil einer Fliehgewichtsbaugruppe 51 des an eine nicht näher dargestellte Einspritzpumpe angebauten Drehzahlreglers 45, an dieser Baugruppe 51 drehfest befestigt und über diese mit der als Rotationskörper dienenden Antriebswelle 10 drehfest verbunden. Damit die Winkelgebermarke 12′ am Blechwinkel 48 in eine genaue, z.B. dem Förderbeginn entsprechende Drehlage an der Blechkapsel 47 befestigt werden kann, ist letztere mit einem Langloch 52 versehen, das sich in Umfangsrichtung der Blechkapsel 47 erstreckt und zur besseren Lagesicherung des Blindniets 49 und damit des Blechwinkels 48 an seinen Seitenwänden 52a mit einer feingezahnten Oberfläche versehen ist (siehe dazu Figur 6).

Zur Befestigung des Blechwinkels 48 dient ein in Figur 5 gestrichelt angedeutetes Nietwerkzeug 53, mit dem der Blindniet 49 bei zuvor um den Winkel α in Figur 4 aus der Mittelachse M im Uhrzeigersinn verdrehter Antriebswelle 10 befe-stigt wird. Der Winkel α entspricht genau dem Abstand zwischen der Mitte der Winkelgebermar-ke 12′ und einer zugehörigen nicht näher bezeichneten, den Blindniet 49 aufnehmenden Bohrung im Blechwinkel 48. Wie bereits zu Figur 1 beschrieben, leuchten auch hier in der Prüfschaltung 18 bei genau in Mittellage des Geberkörpers 19 stehender Winkelgebermarke 12′ beide Kontrolleuchten 29 und 35 zugleich auf.

Zur Bestimmung der vorbestimmten, z.B. dem Förderbeginn eines ersten Pumpenauslasses zugeordneten Drehlage der Winkelgebermarke 12 bzw. 12′ dienen bei allen Ausführungsbeispielen die in das Gehäuse 11 eingesetzten Signalgeber 15 bzw. 15′ oder 15″ mit der dazugehörigen Prüfschaltung 18 bzw. 18′. Bein erstmaligen Einstellen der Lage der Winkelgebermarke 12, 12′ zur Antriebswelle 10 kann zum Ausgleich der vorhan-denen Winkelabweichung entweder die Winkel-gebermarke 12, 12′ selber relativ zur Antriebswelle 10 verstellt werden, wie dies zu den Figuren 4 bis 6 beschrieben wurde, oder es kann die Einbaulage des Gehäuses 16 verändert werden, indem dieses, wie in Figur 2 angedeutet, über eine exzentrische Aufnahmebüchse 55 in die entsprechend grössere Aufnahmebohrung 14 des Gehäuses 11 eingesetzt wird. Diese Aufnahmebüchse 55 ist auf einer Seite zur Aufnahme des Fixierstiftes 42 geschlitzt, und der mit 55a bezeichnete Schlitz dient auch zur Lagefixierung der Aufnahmebüchse 55 im Gehäuse 11, welches zu diesem Zweck mit einer vorspringenden Nase 56 versehen ist.

Die einfachste Möglichkeit, die Lage des Signalgebers 15, z.B. bei dem in Figur 1 dargestellten Beispiel, mit der vorbestimmten Winkellage der Antriebswelle 10 bei mittig stehender Winkelgebermarke 12 in Einklang zu bringen, besteht darin, das die Winkelgebermarke 12 tragende Teil 13 relativ zur Antriebswelle 10 zu verdrehen, was auf die einfachste Weise durch Lösen einer Konusverbindung 57 zwischen den beiden Teilen 10, 13 und danach erfolgendes Anziehen dieser Verbindung bei entsprechend ausgerichteten Teilen erfolgen kann. Dazu werden das Teil 13 und die Antriebswelle 10 ohne die sonst übliche Keilverbindung ausgeführt.

Obwohl die wesentlichen Funktionen bereits zu den Ausführungsbeispielen beschrieben sind, wird nachfolgend ein Prüfarbeitsgang zum Auffinden der bereits eingestellten vorbestimmten Drehlage der Antriebswelle 10 anhand der Figuren 1 und 2 kurz erläutert:

Bei der vorher bezüglich der vorbestimmten Drehlage der Winkelgebermarke 12 eingestellten Einspritzpumpe wird der in Figur 1 mit der Prüfschaltung 18 verbundene Signalgeber 15 in die Aufnahmebohrung 14 des Gehäuses 11 eingesetzt und die Antriebswelle 10 im Uhrzeigersinn, in Richtung des Pfeiles P, solange verdreht, bis zuerst bei Annäherung an die Mittellage die Kontrolleuchte 29 des Grobanzeigeschaltkreises 31 aufleuchtet. Jetzt wird die Nockenwelle 10 langsam weitergedreht, bis auch die zweite Kontrollleuchte 35 des Feinanzeigeschaltkreises 34 aufleuchtet, wie dies bei dem in Figur 2 dargestellten Ausführungsbeispiel der Fall ist. Würde die Antriebswelle 10 auch nur geringfügig über die vorbestimmte Drehlage hinaus weitergedreht, dann würde sofort die Kontrolleuchte 35 in Figur 1 bzw. 29 in Figur 2 wieder erlöschen, da der Kontakt zwischen den Schaltkontakten 19a und 19b bzw. 19a′ und 19b′ unterbrochen würde. Unabhängig davon, ob, wie bein ersten Ausführungsbeispiel nach Figur 1 und dem dritten Ausführungsbeispiel nach Figur 4, der Masseanschluss der Batterie 17 über einen Schaltkontakt des Geberkörpers 19 erfolgt, oder ob er, wie in Figur 2, über die Winkelgebermarke 12 hergestellt wird, in allen Fällen zeigt das Aufleuchten beider Kontrolleuchten 29 und 35 erst die genaue vorbestimmte Drehlage an.

Die als Stromversorgungsquelle dienende Batterie 17 kann entweder von der den Motor mit Strom versorgenden Batterie gebildet sein, oder sie kann auch von einer besonderen Batterie gebildet sein, die zusammen mit dem Signalgeber 15, 15' und der Prüfschaltung 18 in einem gemeinsamen Gehäuse untergebracht ist und so wie eine Prüflampe gehandhabt werden kann. Je nach der gefertigten Stückzahl und der vorhandenen Spannungsquelle können anstelle der beiden beschriebenen Kontrolleuchten 29 und 35 auch Leuchtdioden oder andere Warn- und Anzeigeeinrichtungen Verwendung finden.

**Patentansprüche**

1. Einrichtung zum Einstellen und Überprüfen einer vorbestimmten Drehlage eines Rotationskörpers, insbesondere der Förderbeginnstellung der Antriebswelle einer Kraftstoffeinspritzpumpe für Brennkraftmaschinen, mit einer an dem in einem zugehörigen Gehäuse (11) gelagerten Rotationskörper (10) oder an einem mit dem Rotationskörper fest verbundenen Teil (13; 47) angebrachten Winkelgebermarke (12; 12'), die in einer der vorbestimmten Drehlage zugeordneten Drehlage des Rotationskörpers (10) als Signalauslöser eines mit einem Gebergehäuse (16) zum Gehäuse (11) des Rotationskörpers (10) lagefixiert befestigten Signalgebers (15; 15'; 15") dient, dadurch gekennzeichnet, dass der Signalgeber (15; 15'; 15") einen im Gebergehäuse (16) verschiebbar geführten Geberkörper (19; 19') aufweist, dass der Geberkörper (19; 19') durch die Winkelgebermarke (12; 12') oder durch das die Winkelgebermarke (12; 12') tragende Teil (13; 47) bei Annäherung der Winkelgebermarke (12; 12') an die vorbestimmte Drehlage zur Auslösung eines in einen Grobanzeigeschaltkreis (31; 31') eingefügten ersten Kontaktschalters (24; 24') in zur Drehachse (D) des Rotationskörpers (10) zumindest annähernd radialer Richtung verschiebbar ist und dass der Geberkörper (19; 19') innerhalb seiner der Winkelgebermarke (12; 12') zugewandten äusseren Stirnfläche (33) mit mindestens einem mit der Winkelgebermarke (12; 12') zusammenwirkenden und bei Erreichen der vorbestimmten Drehlage durch die Winkelgebermarke (12; 12') ein Drehlagesignal in einem Feinanzeigeschaltkreis (34; 34') auslösenden Schaltkontakt (19b; 19b') eines zweiten Kontaktschalters (25; 25') versehen ist.

2. Einrichtung nach Anspruch 1, dadurch gekennzeichnet, dass das Gebergehäuse (16) gegenüber dem Geberkörper (19) elektrisch isoliert ist und dass der Geberkörper (19) zwei durch eine durch seine Mittelachse (M) gehende Isolierschicht (21) getrennte Körperteile (19a, 19b) aufweist, die als Schaltkontakte dienen.

3. Einrichtung nach Anspruch 1, dadurch gekennzeichnet, dass der Geberkörper (19') zwei Schaltkontakte aufweist, die von zwei gegeneinander und gegenüber dem Geberkörper (19') isolierten Kontaktflächen (19a', 19b') auf der äusseren Stirnfläche (33) des Geberkörpers (19') gebildet sind.

4. Einrichtung nach einem der Ansprüche 2 oder 3, dadurch gekennzeichnet, dass die beiden Schaltkontakte (19a, 19b; 19a', 19b') in den Feinanzeigeschaltkreis (34; 34') eingefügt sind und bei in Verlängerung der Mittelachse des Geberkörpers (19; 19') stehender Winkelgebermarke (12; 12') mit dieser eine das Drehlagensignal auslösende Kontaktbrücke herstellen und somit den zweiten Kontaktschalter (25; 25') bilden.

5. Einrichtung nach einem der Ansprüche 1 bis 4, dadurch gekenzeichnet, dass der erste Kontaktschalter (24) als ein mechanisch auslösbarer Endschalter ausgebildet ist, der am Gebergehäuse (16) befestigt und von einem mit dem Geberkörper (19) verbundenen Kontaktteil (26) betätigbar ist.

6. Einrichtung nach Anspruch 2 oder 3, dadurch gekennzeichnet, dass die beiden Schaltkontakte (19a, 19b; 19a', 19b') des Geberkörpers (19; 19') je einen Schaltkontakt des ersten und zweiten Kontaktschalters (24', 25') bilden und dass die Winkelgebermarke (12; 12') den jeweils anderen, vorzugsweise mit einem Masseanschluss (41) der zugehörigen Schaltkreise (31', 34') verbundenen Schaltkontakt bildet.

7. Einrichtung nach Anspruch 6, dadurch gekennzeichnet, dass je nach der Drehrichtung des Rotationskörpers (10) der jeweils zuerst von der Winkelgebermarke (12) oder von dem mit der Winkelgebermarke (12) versehenen Teil berührte eine Schaltkontakt (19a) als der Schaltkontakt des dem Grobanzeigeschaltkreis (31') zugeordneten ersten Kontaktschalters (24') und der danach in Kontakt mit der Winkelgebermarke (12) kommende andere Schaltkontakt (19b') als der Schaltkontakt des dem Feinanzeigeschaltkreis (34') zugeordneten zweiten Kontaktschalters (25') dient und dass zur Anzeige der vorbestimmten Drehlage beide Kontaktschalter (24', 25') betätigt sind.

8. Einrichtung nach einem der vorangehenden Ansprüche, dadurch gekennzeichnet, dass beide Anzeigeschaltkreise (31, 34; 31', 34') je eine, vorzugsweise von einer Kontrolleuchte (29, 35) gebildete Anzeigeeinrichtung enthalten.

9. Einrichtung nach Anspruch 1, dadurch gekennzeichnet, dass die Winkelgebermarke (12') aus einem über die äusserste radiale Erstreckung eines Wandteiles (47a) des mit dem Rotationskörper (10) fest verbundenen Teils (47) herausragenden, rechtwinklig abgebogenen Lappen eines Blechwinkels (48) besteht, der auf den Wandteil (47a), vorzugsweise mittels eines Blindniets (49), aufgenietet ist, und dass der Wandteil (47a) mit einem der Aufnahme des Blindniets (49) dienenden, sich in Umfangsrichtung erstreckenden Langloch (52) versehen ist.

10. Einrichtung nach Anspruch 9, dadurch gekennzeichnet, dass die Seitenwände (52a) des Langlochs (52) eine feingezahnte Oberfläche aufweisen.

11. Einrichtung nach Anspruch 9 oder 10, dadurch gekennzeichnet, dass der Wandteil (47a) von einer mindestens teilweise zylindrischen Wandung einer mit dem Rotationskörper (10) fest verbundenen Blechkapsel gebildet ist, welche vorzugsweise an einer Fliehgewichtsbaugruppe (51) eines an eine Einspritzpumpe angebauten Drehzahlreglers (45) befestigt ist.

**Claims**

1. Device for adjusting and verifying a predetermined rotary position of a body of rotation, particularly the delivery start position of the drive shaft of a fuel injection pump for internal combustion engines, with an angle transducer mark (12; 12') attached to the body of rotation (10) mounted in an associated housing (11) or to a part (13; 47) connected firmly to the body of rotation, which serves in a rotary position of the body of rotation (10) associated with the predetermined rotary position as a signal tripper of a signal transducer (15; 15', 15") attached to a transducer housing (16) in fixed position relative to the housing (11) of the body of rotation (10), characterised in that the signal transducer (15; 15', 15") exhibits a transducer body (19; 19') guided slidably in the transducer housing (16), that the transducer body (19; 19') is slidable in an at least approximately radial direction to the axis of rotation (D) of the body of rotation (10) by the angle transducer mark (12; 12') or by the part (13; 47) carrying the angle transducer mark (12; 12') when the angle transducer mark (12; 12') approaches the predetermined rotary position in order to trip a first contact switch (24; 24') included in a coarse indication circuit (31; 31') and that the transducer body (19; 19') is provided within its external end face (33) facing the angle transducer mark (12; 12') with at least one switch contact (19b; 19b') of a second contact switch (25; 25') which cooperates with the angle transducer mark (12; 12') and trips a rotary position signal in a fine indication circuit (34; 34') when the angle transducer mark (12; 12') attains the predetermined rotary position.

2. Device according to Claim 1, characterised in that the transducer housing (16) is insulated electrically relative to the transducer body (19) and that the transducer body (19) exhibits two body parts (19a, 19b) separated by an insulating layer (21) passing through its median axis (M), which serve as switch contacts.

3. Device according to Claim 1, characterised in that the transducer body (19') exhibits two switch contacts which are formed by two contact surfaces (19a', 19b') insulated mutually and relative to the transducer body (19') on the external end face (33) of the transducer body (19').

4. Device according to either Claim 2 or 3, characterised in that the two switch contacts (19a, 19b; 19a', 19b') are included in the fine indication circuit (34; 34') and, in the case of an angle transducer mark (12; 12') positioned in prolongation of the median axis of the transducer body (19; 19') form with the latter a contact bridge tripping the rotary position signal and therefore the second contact switch (25; 25').

5. Device according to any of Claims 1 to 4, characterised in that the first contact switch (24) is constructed as a mechanically trippable limit switch which is attached to the transducer housing (16) and is actuable by a contact part (26) connected to the transducer body (19).

6. Device according to Claim 2 or 3, characterised in that the two switch contacts (19a, 19b; 19a', 19b') of the transducer body (19; 19') each form a switch contact of the first and second contact switch (24', 25') and that the angle transducer mark (12; 12') forms the respective other switch contact, preferably connected to an earth connection (41) of the associated circuits (31', 34').

7. Device according to Claim 6, characterised in that, depending upon the direction of rotation of the body of rotation (10), the respective switch contact (19a) first touched by the angle transducer mark (12) or by the part provided with the angle transducer mark (12) serves as the switch contact of the first contact switch (24') associated with the coarse indication circuit (31') and the other switch contact (19b') which comes into contact with the angle transducer mark (12) afterwards serves as the switch contact of the second contact switch (25') associated with the fine indication circuit (34') and that both contact switches (24', 25') are actuated in order to indicate the predetermined rotary position.

8. Device according to any of the previous Claims, characterised in that each of the two indication circuits (31, 34; 31', 34') contains an indication device, preferably formed by a monitor lamp (29, 35).

9. Device according to Claim 1, characterised in that the angle transducer mark (12') consists of a tab of a sheet-metal angle (48) bent at right angles and projecting out beyond the extreme radial extent of a wall part (47a), of the part (47) firmly connected to the body of rotation (10), which is riveted onto the wall part (47a) preferably by means of a blind rivet (49), and that the wall part (47a) is provided with a slot (52) extending in the circumferential direction and serving to receive the blind rivet (49).

10. Device according to Claim 9, characterised in that the side walls (52a) of the slot (52) exhibit a finely toothed surface.

11. Device according to Claim 9 or 10, characterised in that the wall part (47a) is formed by an at least partially cylindrical wall of a sheet-metal capsule firmly connected to the body of rotation (10), which is preferably attached to a centrifugal weight subassembly (51) of a speed regulator (45) mounted on an injection pump.

**Revendications**

1. Dispositif d'ajustage et de contrôle d'une position angulaire prédéterminée d'un corps en rotation, en particulier de la position, au début du refoulement, de l'arbre d'entrainement d'une pompe d'injection de carburant pour moteurs à combustion interne, comportant un repère d'indicateur angulaire (12; 12) qui est rapporté sur le corps en rotation (10), tourillonnant dans un carter afférent (11) ou sur une pièce (13; 47) solidarisée avec le corps en rotation, et qui sert, dans une position angulaire, correspondant à la position angulaire prescrite, du corps en rotation (10), de déclencheur de signaux d'un émetteur de signaux (15; 15'; 15") fixé en position, par un carter d'émetteur (16), au carter (11) du corps en rotation (10), caractérisé en ce que l'émetteur de signaux (15; 15', 15") présente un corps d'émetteur (19; 19') guidé en coulissement dans le carter d'émetteur (16); en ce que le repère d'indicateur angulaire (12; 12') ou la pièce (13; 47) portant ce repère (12; 12'), lorsque le repère (12; 12') s'approche de la position angulaire prescrite, peut faire couliser le corps d'émetteur (19; 19') dans la direction au moins approximativement radiale par rapport à l'axe de rotation (D) du corps en rotation (10) pour déclencher un premier commutateur (24; 24') monté dans un circuit d'indication grossière (31; 31'); et en ce que le corps d'émetteur (19; 19') comporte, à l'intérieur de sa surface frontale extérieure (33) côté repère de l'indicateur angulaire (12; 12'), au moins un contact (19b; 19b') d'un second commutateur (25; 25') qui collabore avec le repère d'indicateur angulaire (12; 12') et qui, lorsque l'on atteint la position angulaire prescrite, déclenche, au moyen du repère (12; 12'), un signal de position angulaire dans un circuit d'indication fine (34; 34').

2. Dispositif selon la revendication 1, caractérisé en ce que le carter d'émetteur (16) est électriquement isolé par rapport au corps d'émetteur (19) et en ce que le corps d'émetteur (19) présente deux parties (19a, 19b) séparées par une couche isolante (21), qui passe par son axe (M), et servant de contacts.

3. Dispositif selon la revendication 1, caractérisé en ce que le corps d'émetteur (19') présente deux contacts formés par deux surfaces (19a', 19b'), isolées l'une par rapport à l'autre et par rapport au corps d'émetteur (19') sur la surface frontale extérieure (33) du corps d'émetteur (19').

4. Dispositif selon l'une des revendications 2 ou 3, caractérisé en ce que les deux contacts (19a; 19b; 19a', 19b') sont montés dans le circuit d'indication fine (34; 34') et, lorsque le repère d'indicateur angulaire (12; 12') se trouve dans le prolongement de l'axe du corps d'émetteur (19; 19'), forment avec lui un pont qui déclenche le signal de position angulaire et constituent ainsi le second commutateur (25; 25').

5. Dispositif selon l'une des revendications 1 à 4, caractérisé en ce que le premier commutateur (24) est conçu comme contacteur de fin de course pouvant être déclenché mécaniquement, fixé au carter d'émetteur (16) et pouvant être actionné par une pièce (26) formant contact et liée au corps d'émetteur (19).

6. Dispositif selon la revendication 2 ou la revendication 3, caractérisé en ce que les deux contacts (19a, 19b; 19a', 19b') du corps d'émetteur (19; 19') forment chacun un contact du premier commutateur et du second commutateur (24', 25') et en ce que le repère d'indicateur angulaire (12; 12') forme respectivement l'autre contact, de préférence relié à une borne de masse (41) du circuit afférent (31, 34').

7. Dispositif selon la revendication 6, caractérisé en ce que selon chaque fois le sens de rotation du corps en rotation (10), l'un des contacts (19a), venant respectivement d'abord en contact avec le repère indicateur angulaire (12) ou avec la pièce munie de ce repère (12), sert de contact du premier commutateur (24') correspondant au circuit d'indication grossière (31') et l'autre contact (19b'), qui vient ensuite en contact avec le repère (12), sert de contact du second commutateur (25') correspondant au circuit d'indication fine (34'); et en ce que les deux commutateurs (24', 25') sont actionnés pour indiquer la position angulaire prescrite.

8. Dispositif selon l'une des revendications précédentes, caractérisé en ce que les deux circuits indicateurs (31, 34; 31', 34') contiennent chacun un dispositif indicateur, constitué de préférence d'une lampe de contrôle (29, 35).

9. Dispositif selon la revendication 1, caractérisé en ce que le repère d'indicateur angulaire (12') est constitué d'une aile d'une cornière (48), qui est repliée à angle droit et qui sort au-delà de l'extension radiale extrême d'une partie de paroi (47a) de la pièce (47) solidarisée avec le corps en rotation (10), cornière qui est rivée sur la partie de paroi (47a), de préférence au moyen d'un rivet aveugle (49); et en ce que la partie de paroi (47a) présente une lumière (52) qui sert à recevoir le rivet aveugle (49) et qui s'étend en direction périphérique.

10. Dispositif selon la revendication 9, caractérisé en ce que les parois latérales (52a) de la lumière (52) présentent une surface à denture fine.

11. Dispositif selon la revendication 9 ou la revendication 10, caractérisé en ce que la partie de paroi (47a) est formée d'une paroi, au moins partiellement cylindrique, d'un boitier solidarisé au corps en rotation (10) et fixé de préférence à un ensemble masselotte (51) d'un régulateur de vitesse de rotation (45) monté sur une pompe d'injection.

0 069 826

**FIG.1**

**FIG.3**

**FIG.2**

9

0 069 826

FIG. 4

FIG. 5

FIG. 6

11